# EUROPEAN PATENT APPLICATION

(11) **EP 4 585 450 A1**
(43) Date of publication of application: **16.07.2025**
(21) Application number: 24217358.1
(22) Date of filing: 04.12.2024
(51) Int. Cl.: B60L 53/16, H01R 13/66, H05B 3/00

(54) **HEATED CHARGING INLET ASSEMBLY**

(30) Priority: 08.01.2024 US 202463618461 P; 22.04.2024 US 202463636958 P; 23.10.2024 US 202418924069
(71) Applicant: Aptiv Technologies AG, 8200 Schaffhausen (CH)
(72) Inventor: PLANT, Mark, 8200 Schaffhausen (CH); MATHEWS, Thomas, 8200 Schaffhausen (CH); ILER, Troy, 8200 Schaffhausen (CH)
(74) Representative: Bardehle Pagenberg Partnerschaft mbB Patentanwälte Rechtsanwälte

(57) **Abstract**

An electrical charging inlet assembly includes a circuit board assembly, a filler material, and a heater core. The circuit board assembly includes a heater. The filler material that is thermally-conductive and disposed around the heater. The heater core thermally-engages the filler material.

## Description

### CROSS-REFERENCE TO RELATED APPLICATIONS

This application claims the benefit of U.S. Provisional Application No. 63/618,461 filed January 8, 2024, and U.S. Provisional Application No. 63/636,958 filed April 22, 2024. The entire disclosures of the above applications are incorporated by reference.

### FIELD

The present disclosure relates to a heated charging inlet assembly, and more particularly to an electric vehicle charging inlet assembly including a resistive heater subassembly.

### BACKGROUND

Modern electric vehicles (e.g., automobiles) rely on electrical wiring and electrical connections to facilitate charging of the batteries within the vehicle. Connection systems (e.g., connectors and terminals), also known as charging inlets and connectors/couplers, play an important role in ensuring the integrity of these electrical connections and the reliability and performance of the vehicle. Moisture and/or ice intrusion in a connection system (e.g., in or near an interface between two connectors or terminals) can inhibit disengagement of one connector or terminal of a connector/coupler from another connector or terminal of a charging inlet and/or inhibit a secure connection between connectors and/or terminals of the connector/coupler and the charging inlet. Known systems for preventing moisture and/or ice intrusion have utilized heating systems (e.g., heater circuits) through a variety of charging inlet designs. While known systems for heating connection systems have proven acceptable for their intended purpose, a continuous need for improvement remains in the pertinent art to address the challenges associated with melting ice between mating terminals and/or connectors.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

An electrical charging inlet assembly includes a circuit board assembly, a filler material, and a heater core. The circuit board assembly includes a heater. The filler material that is thermally-conductive and disposed around the heater. The heater core thermally-engages the filler material.

A method of assembling and operating an electrical charging inlet assembly includes connecting a circuit board assembly including a heater with a housing having a heater core. The method also includes connecting a terminal position assurance (TPA) member including a fill port with the circuit board assembly and the housing. The method further includes injecting a filler material through the fill port to fill a cavity. In an assembled configuration, the filler material is disposed around the heater and is in contact with the circuit board assembly and the heater core.

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is a perspective view of an example charging inlet assembly in accordance with the principles of the present disclosure.
FIG. 2 is a perspective view of the charging inlet assembly of FIG. 1 with a portion of the charging inlet assembly shown in phantom line format for illustrative purposes in accordance with the principles of the present disclosure.
FIG. 3 is an exploded perspective view of the charging inlet assembly of FIG. 1 in accordance with the principles of the present disclosure.
FIG. 4 is a front view of the charging inlet assembly of FIG. 1 with a portion of the charging inlet assembly hidden for illustrative purposes in accordance with the principles of the present disclosure.
FIG. 5 is a partial perspective view of the charging inlet assembly of FIG. 1 in accordance with the principles of the present disclosure.
FIG. 6 is a cross-sectional view of the charging inlet assembly of FIG. 1 in accordance with the principles of the present disclosure.
FIG. 7 is a flowchart depicting an example method for assembling and operating a charging inlet assembly in accordance with the principles of the present disclosure.

In the drawings, reference numbers may be reused to identify similar and/or identical elements.

### DETAILED DESCRIPTION

### INTRODUCTION

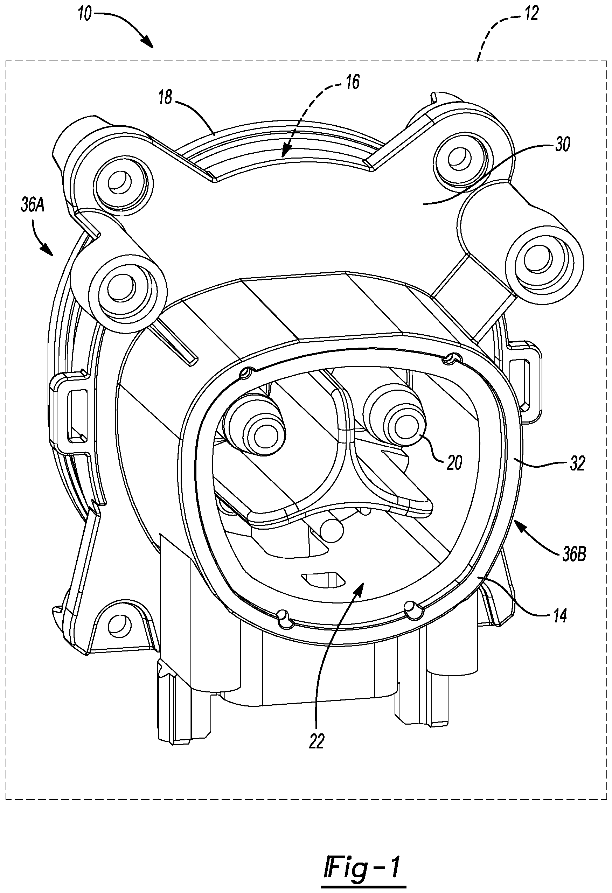

With reference to FIGS. 1-3, an example electrical charging inlet assembly 10 (e.g., a connector assembly) is shown. As will be explained in more detail below, the charging inlet assembly 10 may be installed in a vehicle 12 (e.g., an automobile) to facilitate the transmission of electricity between a charger and various components (e.g., a battery) of the vehicle. For example, the inlet assembly 10 may be a male or female connector detachably couplable to a mating connector (e.g., a male or female connector, such as a charging connector/coupler, not shown) such that, during operation of charger, electricity is transmitted to the inlet assembly 10 and to various electronic components within the vehicle.

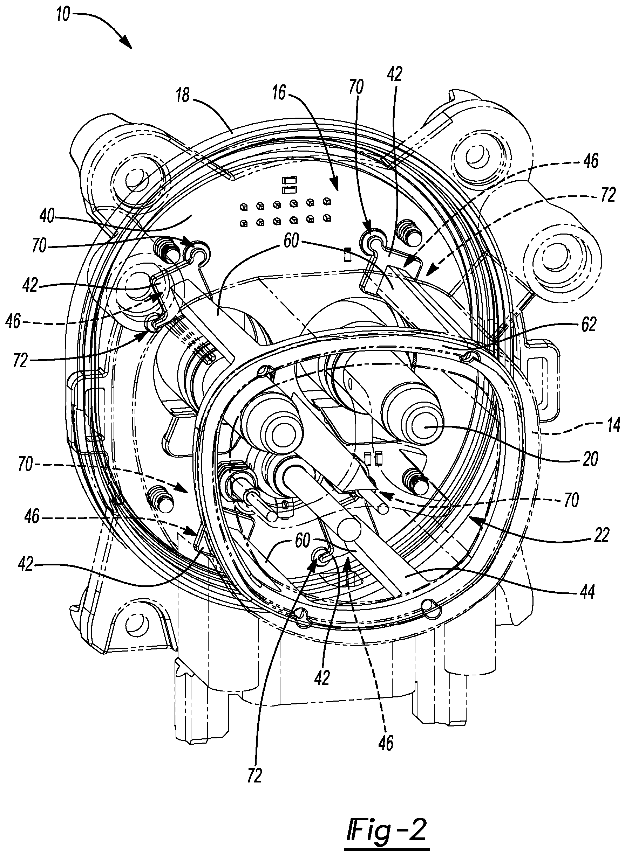

In various implementations, the inlet assembly 10 includes an inlet housing 14, a heater subassembly 16, a terminal position assurance (TPA) member 18, and one or more terminals 20, among others. As illustrated in FIGS. 1 and 2, in some implementations, the inlet housing 14 may be a female connector forming a connector interface 22 (e.g., a cavity) in which the terminals 20 are disposed.

### INLET HOUSING

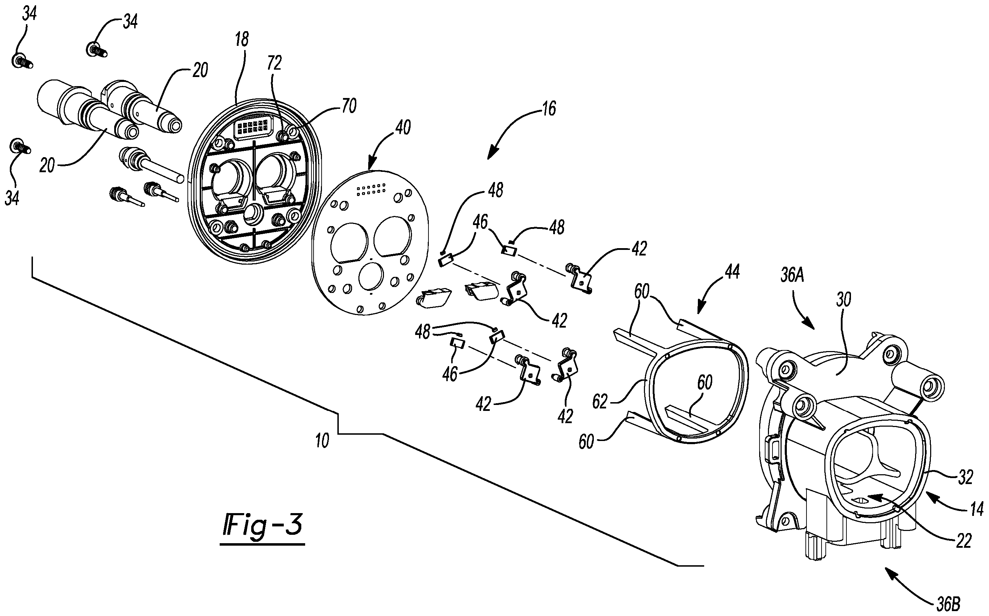

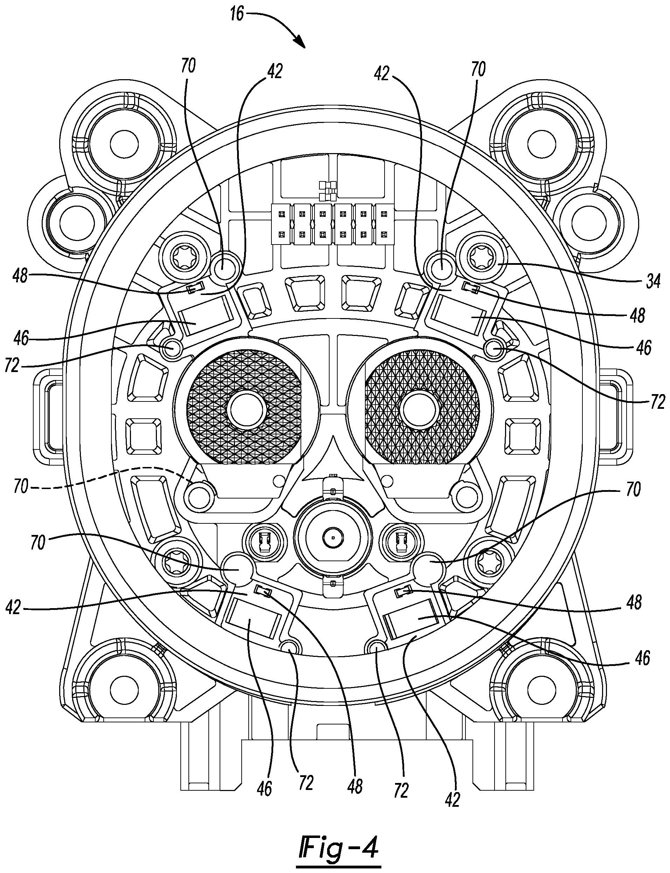

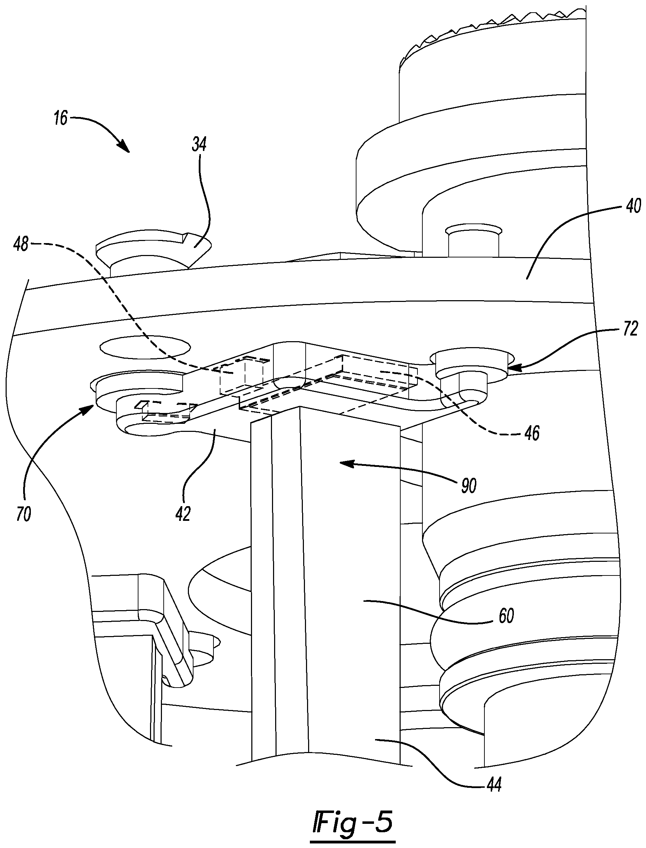

With reference to FIGS. 1 and 3, in various implementations, the inlet housing 14 may comprise one or more of a variety of shapes, sizes, configurations, and/or materials. The inlet housing 14 may include a base 30 and a structure 32 extending from the base 30. In some example configurations, the structure 32 may define the connector interface 22. In various implementations, the inlet housing 14 connects with the TPA member 18. Referring now to FIGS. 4-6, in various implementations, the inlet housing 14 may be secured with the TPA member 18 via one or more mechanical fasteners 34 (e.g., screws, etc.).

In various implementations, the inlet housing 14 may include a first end 36A and a second end 36B spaced apart from and opposite the first end 36A. In some example configurations, the base 30 and/or the TPA member 18 may be disposed proximate the first end 36A. In some instances, the TPA member 18 may connect with the base 30. The connector interface 22 may be accessible proximate the second end 36B.

### HEATER SUBASSEMBLY

With reference to FIG. 2, in various implementations, the heater subassembly 16 may be connected to and/or may be at least partially disposed in the inlet housing 14. The heater subassembly 16 may include a printed circuit board assembly (PCBA) 40, a filler material 42 (e.g., thermal interface), and a heater core 44 (e.g., a heater core), among others. In various implementations, the PCBA 40 may include at least one heater 46 (e.g., a resistive heater) and at least one thermistor 48, among others.

As illustrated in FIGS. 2^1, in some implementations, the PCBA 40 includes four heaters 46 and four thermistors 48. It will be appreciated, however, that the PCBA 40 may include more or less than four heaters 46 and more or less than four thermistors 48 within the scope of the present disclosure. In some implementations, a heater 46 may include a resistive heater. In some example configurations, the heater(s) 46 may be arranged in an electrical circuit (e.g., a temperature-monitored circuit) with the thermistor(s) 48 and one or more other components of the PCBA 40.

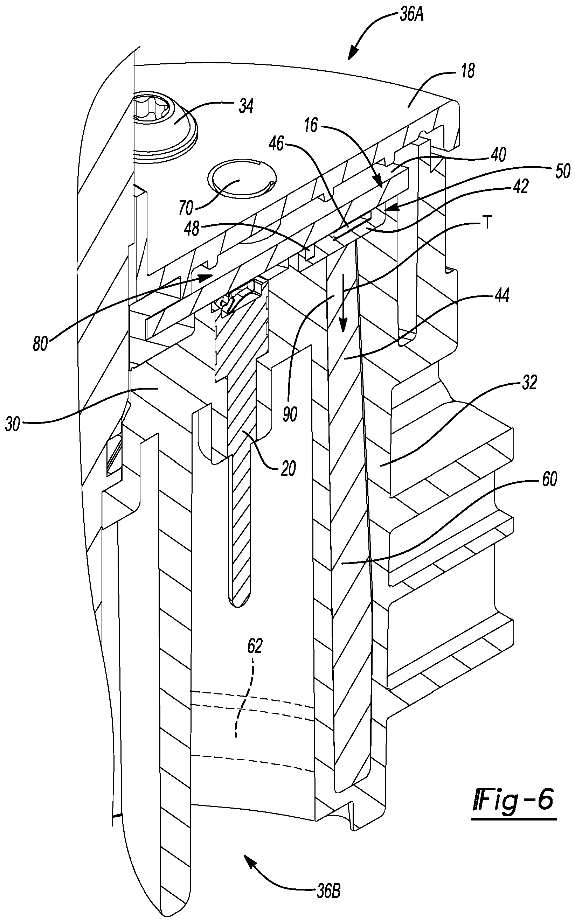

In various implementations, the filler material 42 may include a material that is thermally conductive and electrically insulative. As illustrated in FIG. 6, in some implementations, the inlet housing 14 defines a cavity 50 in which the filler material 42 is disposed.

With reference to FIGS. 2 and 3, in various implementations, the heater core 44 may include one or more legs 60 and one or more ring portions 62. In some implementations, the heater core 44 includes four legs 60 and one ring portion 62 connected to the legs 60. It will be appreciated, however, that the heater core 44 may include more or less than four legs 60 and more or less than one ring portion 62 within the scope of the present disclosure. For example, the number of legs 60 may correspond with the number of heaters 46. As illustrated in FIGS. 1 and 2, the heater core 44 may be encapsulated (e.g., overmolded) within the inlet housing 14.

### TERMINAL POSITION ASSURANCE MEMBER

In various implementations, the TPA member 18 can align the terminals 20 to the inlet housing 14 and be attached to the inlet housing 14 with mechanical fasteners 34 (e.g., screws), or other suitable fastening means, to secure the position of the terminals 20 and/or the PCBA 40. As illustrated in FIGS. 2, 4, and 6, in some implementations, the TPA member 18 and/or the PCBA 40 defines one or more fill ports 70 and one or more exhaust ports 72. During construction of the charging inlet assembly 10, material (e.g., filler material 42) can be injected through the fill ports 70, into the cavity 50, and into the exhaust ports 72. The fill ports 70 and/or the exhaust ports 72 can also allow for the determination (e.g., through visual inspection) of whether the cavity 50 has been sufficiently filled with the filler material 42. For example, when the filler material 42 is visible within the exhaust port 72, a user can determine that a sufficient quantity of filler material 42 is disposed within the cavity 50.

### ASSEMBLED CONFIGURATION OF ELECTRICAL CHARGING INLET ASSEMBLY

With reference to FIG. 6, in an assembled configuration, the TPA member 18 may be connected with the inlet housing 14 such that a void 80 is disposed between the base 30 and the TPA member 18. The PCBA 40 may be disposed in the void 80. In various implementations, the filler material 42 is disposed around and/or may engage the heaters 46 and/or the thermistors 48. The filler material 42 is in contact with (e.g., thermally-engages) the PCBA 40 and the heater core 44.

In various implementations, portions of the legs 60 of the heater core 44 are disposed in the base 30 of the inlet housing 14. Additional portions of the legs 60 are disposed in the structure 32 of the inlet housing 14. The ring portion 62 of the heater core 44 is disposed in the structure 32. In various implementations, the legs 60 are in contact with (e.g., thermally-engage) the filler material 42. For each respective leg 60, an end portion 90 of the leg 60 is disposed proximate a heater 46 and the filler material 42 is disposed between the end portion 90 and the heater 46.

### OPERATION OF ELECTRICAL CHARGING INLET ASSEMBLY

With continued reference to FIG. 6, during operation of the charging inlet assembly 10, the heater(s) 46 may transfer heat T to the inlet housing 14 through the filler material 42 and the heater core 44 to melt ice that may be accumulated on and/or in the inlet housing 14 and/or the terminals 20. For example, the heater(s) 46 transfer heat T through the filler material 42, the legs 60, and the ring portion 62. In various implementations, the heater(s) 46 can directly heat the heater core 44 encapsulated in the inlet housing 14 near the connector interface 22, allowing for heating to occur in this region and removing any ice which prevents the user from removing the charge coupler. Use of the thermally conductive and electrically insulative filler material 42 between the heater core 44 and the heater(s) 46 allows for a robust connection and efficient transfer of heat between the heater core 44 and the heater(s) 46.

In various implementations, the charging inlet assembly 10 enables (i) real-time sensing of the temperature of the heater(s) 46, (ii) minimal delay in the operation of the thermistor(s) 48, and (iii) superior performance of the heater subassembly 16.

In various implementations, the close proximity of, and the direct path for the transfer of heat T from, the heater(s) 46 to the heater core 44 through the filler material 42, allows the heater(s) 46 to increase the temperature of the inlet housing 14 and the connector interface 22 above freezing temperatures with minimal loss of heat and efficient control of the temperature of the heater 46 through the electrical circuit (e.g., a temperature-monitored circuit) of the PCBA 40.

### FLOWCHART

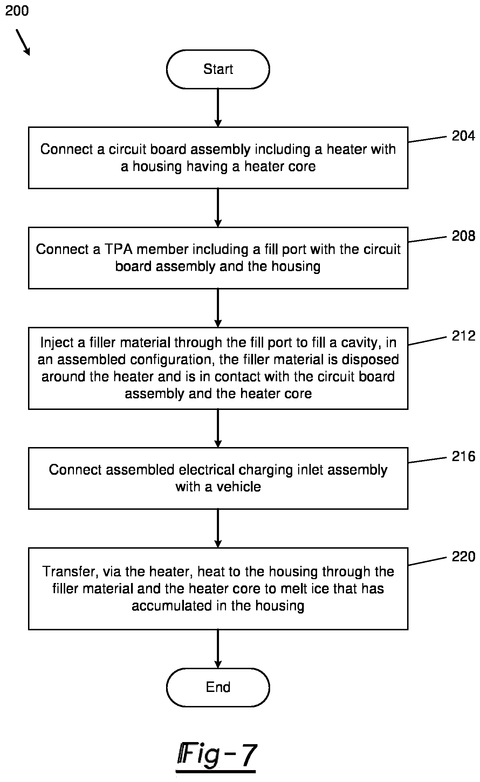

FIG. 7 is an example method 200 for assembling and operating a charging inlet assembly 10. The method 200 may begin at 204. At 204, a user may connect a printed circuit board assembly (PCBA) 40 including a heater 46 with an inlet housing 14 having a heater core 44. The method 200 may proceed to 208.

At 208, a user may connect a terminal position assurance (TPA) member 18 including a fill port 70 with the PCBA 40 and the inlet housing 14. The method 200 may proceed to 212. At 212, a user or a machine, may inject a filler material 42 through the fill port 70 to fill a cavity 50. In assembled configuration, the filler material 42 is disposed around the heater 46 and is in contact with (e.g., thermally-engages) the PCBA 40 and the heater core 44. The method 200 may proceed to 216.

At 216, a user or a machine (e.g., a robot) may connect an assembled electrical charging inlet assembly 10 with a vehicle 12. The method 200 may proceed to 220. At 220, during operation of the inlet assembly 10, the heater 46 may transfer heat T to the inlet housing 14 through the filler material 42 and the heater core 44 to melt ice that has accumulated in the inlet housing 14. In various implementations, the heater core 44 includes at least one leg 60 and a ring portion 62 connected to the leg 60. An end portion 90 of the leg 60 is disposed proximate the heater 46 and the filler material 42 is disposed between the end portion 90 and the heater 46. Transferring, via the heater 46, heat T to the inlet housing 14 includes transferring heat T through the filler material 42, the leg 60, and the ring portion 62. Then the method 200 may end.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

Spatial and functional relationships between elements (for example, between modules, circuit elements, semiconductor layers, etc.) are described using various terms, including "connected," "engaged," "coupled," "adjacent," "proximate," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The term "set" does not necessarily exclude the empty set - in other words, in some circumstances a "set" may have zero elements. The term "non-empty set" may be used to indicate exclusion of the empty set - in other words, a non-empty set will always have one or more elements. The term "subset" does not necessarily require a proper subset. In other words, a "subset" of a first set may be coextensive with (equal to) the first set. Further, the term "subset" does not necessarily exclude the empty set - in some circumstances a "subset" may have zero elements.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

The following Clauses provide an exemplary configuration for a heated charging inlet assembly, as described above.

Clause 1: An electrical charging inlet assembly comprising: a circuit board assembly including a heater; a filler material that is thermally-conductive and disposed around the heater; and a heater core thermally-engaging the filler material.

Clause 2: The electrical charging inlet assembly of clause 1 further comprising a housing including: a base; and a structure extending from the base and defining a cavity.

Clause 3: The electrical charging inlet assembly of clause 2 further comprising a terminal position assurance (TPA) member connected to the housing, wherein, in an assembled configuration: a void is disposed between the base and the TPA member, and the circuit board assembly is disposed in the void.

Clause 4: The electrical charging inlet assembly of clause 3 wherein: the housing includes a first end and a second end spaced apart from and opposite the first end; the base and the TPA member are disposed proximate the first end; and the cavity is accessible proximate the second end.

Clause 5: The electrical charging inlet assembly of any of clauses 3 through 4 wherein: the TPA member includes a fill port in fluid communication with the void and configured to receive the filler material; and in the assembled configuration, the filler material is disposed within the void and in contact with the circuit board assembly and the heater core.

Clause 6: The electrical charging inlet assembly of any of clauses 3 through 5 wherein the TPA member includes a plurality of fill ports configured to receive the filler material.

Clause 7: The electrical charging inlet assembly of any of clauses 2 through 6 wherein, during operation of the electrical charging inlet assembly, the heater transfers heat to the housing through the filler material and the heater core to melt ice that has accumulated in the cavity.

Clause 8: The electrical charging inlet assembly of any of clauses 1 through 7 wherein the filler material is electrically insulative.

Clause 9: The electrical charging inlet assembly of any of clauses 2 through 8 wherein the heater core includes: a leg; and a ring portion connected to the leg.

Clause 10: The electrical charging inlet assembly of clause 9 wherein the leg engages the filler material.

Clause 11: The electrical charging inlet assembly of any of clauses 9 through 10 wherein: a portion of the leg is disposed in the base; an additional portion of the leg is disposed in the structure; and the ring portion is disposed in the structure.

Clause 12: The electrical charging inlet assembly of any of clauses 9 through 11 wherein: an end portion of the leg is disposed proximate the heater; and the filler material is disposed between the end portion and the heater.

Clause 13: The electrical charging inlet assembly of any of clauses 9 through 12 wherein, during operation of the electrical charging inlet assembly, the heater transfers heat through the filler material, the leg, and the ring portion.

Clause 14: The electrical charging inlet assembly of any of clauses 9 through 13 wherein the heater core includes a plurality of legs connected to the ring portion.

Clause 15: The electrical charging inlet assembly of any of clauses 9 through 14 wherein: the circuit board assembly includes a plurality of heaters; the heater core includes a plurality of legs connected to the ring portion; and an end portion of each leg of the plurality of legs is disposed proximate a respective heater of the plurality of heaters.

Clause 16: The electrical charging inlet assembly of any of clauses 1 through 15 wherein the heater is a resistive heater.

Clause 17: A vehicle comprising: the electrical charging inlet assembly of any of clauses 1 through 16.

Clause 18: A method of assembling and operating an electrical charging inlet assembly, the method comprising: connecting a circuit board assembly including a heater with a housing having a heater core; connecting a terminal position assurance (TPA) member including a fill port with the circuit board assembly and the housing; and injecting a filler material through the fill port to fill a cavity, wherein, in an assembled configuration, the filler material is disposed around the heater and is in contact with the circuit board assembly and the heater core.

Clause 19: The method of clause 18 wherein the filler material is thermally-conductive and electrically insulative.

Clause 20: The method of clause 18 wherein: the heater core includes: a leg; and a ring portion connected to the leg; an end portion of the leg is disposed proximate the heater; and the filler material is disposed between the end portion and the heater; and the method further comprises transferring, via the heater, heat to the housing through the filler material and the heater core to melt ice that has accumulated in the housing.

## Claims

1. An electrical charging inlet assembly (10) comprising:
a circuit board assembly (40) including a heater (46);
a filler material (42) that is thermally-conductive and disposed around the heater (46); and
a heater core (44) thermally-engaging the filler material (42).

2. The electrical charging inlet assembly (10) of claim 1 further comprising a housing (14) including:
a base (30); and
a structure (32) extending from the base (30) and defining a cavity.

3. The electrical charging inlet assembly (10) of claim 1 or 2 further comprising a terminal position assurance (TPA) member (18) connected to the housing (14),
wherein, in an assembled configuration:
a void is disposed between the base (30) and the TPA member (18), and
the circuit board assembly (40) is disposed in the void; and
wherein preferably:
the housing (14) includes a first end (36A) and a second end (36B) spaced apart from and opposite the first end;
the base (30) and the TPA member (18) are disposed proximate the first end (36A); and
the cavity is accessible proximate the second end (36B).

4. The electrical charging inlet assembly (10) of claim 3 wherein:
the TPA member (18) includes a fill port (70) in fluid communication with the void and configured to receive the filler material (42); and
in the assembled configuration, the filler material (42) is disposed within the void and in contact with the circuit board assembly (40) and the heater core (44).

5. The electrical charging inlet assembly (10) of claim 3 or 4 wherein the TPA member (18) includes a plurality of fill ports (70) configured to receive the filler material (42).

6. The electrical charging inlet assembly (10) of any one of the preceding claims wherein, during operation of the electrical charging inlet assembly (10), the heater (46) transfers heat to the housing (14) through the filler material (42) and the heater core (44) to melt ice that has accumulated in the cavity.

7. The electrical charging inlet assembly (10) of any one of the preceding claims wherein the heater core (44) includes:
a leg (60); and
a ring portion (62) connected to the leg (60); wherein preferably the leg (60) engages the filler material (42).

8. The electrical charging inlet assembly (10) of claim 7 wherein:
a portion of the leg (60) is disposed in the base (30);
an additional portion of the leg (60) is disposed in the structure; and
the ring portion (62) is disposed in the structure.

9. The electrical charging inlet assembly (10) of claim 7 or 8 wherein:
an end portion of the leg (60) is disposed proximate the heater (46); and
the filler material (42) is disposed between the end portion and the heater (46).

10. The electrical charging inlet assembly (10) of any one of the preceding claims 7 to 9 wherein the heater core (44) includes a plurality of legs (60) connected to the ring portion (62).

11. The electrical charging inlet assembly (10) of claim any one of the preceding claims 7 to 10 wherein:
the circuit board assembly (40) includes a plurality of heaters (46);
the heater core (44) includes a plurality of legs (60) connected to the ring portion (62); and
an end portion of each leg (60) of the plurality of legs (60) is disposed proximate a respective heater of the plurality of heaters (46).

12. The electrical charging inlet assembly (10) of any one of the preceding claims wherein the heater (46) is a resistive heater.

13. A vehicle comprising:
the electrical charging inlet assembly (10) of any one of the preceding claims.

14. A method of assembling and operating an electrical charging inlet assembly (10), the method comprising:
connecting a circuit board assembly (40) including a heater with a housing (14) having a heater core (44);
connecting a terminal position assurance (TPA) member (18) including a fill port (70) with the circuit board assembly (40) and the housing (14); and
injecting a filler material (42) through the fill port to fill a cavity, wherein, in an assembled configuration, the filler material (42) is disposed around the heater (46) and is in contact with the circuit board assembly (40) and the heater core (44), wherein preferably the filler material (42) is thermally-conductive and electrically insulative.

15. The method of claim 14 wherein:
the heater core (44) includes:
a leg (60); and
a ring portion (62) connected to the leg (60);
an end portion of the leg (60) is disposed proximate the heater; and
the filler material (42) is disposed between the end portion and the heater; and
the method further comprises transferring, via the heater (46), heat to the housing (14) through the filler material (42) and the heater core (44) to melt ice that has accumulated in the housing (14).
